# EUROPEAN PATENT APPLICATION

(11) **EP 4 744 935 A1**
(43) Date of publication of application: **20.05.2026**
(21) Application number: 25211214.9
(22) Date of filing: 24.10.2025
(51) Int. Cl.: B60L 3/00, B60L 3/04, H01R 13/707, H02H 7/00

(54) **STOP SYSTEM FOR A HIGH POWER SYSTEM**

(30) Priority: 15.11.2024 SE 2451147
(71) Applicant: Volvo Penta Corporation, 405 08 Göteborg (SE)
(72) Inventor: Kersten, Anton, 433 42 Partille (SE); Eriksson, Tommie, 442 39 Kungälv (SE); Lundvall, Anna, 417 28 Göteborg (SE); Mäsak, Therese, 473 91 Henån (SE); Shirodkar, Dhanashree, 417 52 Göteborg (SE)
(74) Representative: Valea AB

(57) **Abstract**

A stop system (201) for a high power system (203, 303). The stop system (201) is arranged in a Hazardous Voltage Interlock Loop, HVIL, passing through at least a part of the high power system (203, 303). The stop system (201) is configured to trigger disconnection of at least part of the high power system based on a condition of a HVIL low power signal transmitted through the HVIL.

## Description

### TECHNICAL FIELD

The disclosure relates generally to a stop system for a high power system. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Safety is an aspect in a system with high power having high priority. Examples of such systems are vehicles, battery storage systems etc. There are numerous protective measures implemented in such a system. For example, a vehicle with hazardous voltage circuits is required to have a disconnect device for disconnecting the system in case a situation with high risk occurs. For a vehicle system such as a battery system, the disconnect device is located close to the battery system terminals. The disconnect device consists of either a manual operated switch or a circuit breaker. The disconnect device may be an emergency switch off device for disconnecting the power supply.

There is a strive to further improve safety in such systems.

### SUMMARY

According to a first aspect of the disclosure, a stop system for a high power system is provided. The stop system is arranged in a Hazardous Voltage Interlock Loop (HVIL) passing through at least a part of the high power system. The stop system is configured to trigger disconnection of at least part of the high power system based on a condition of a HVIL low power signal transmitted through the HVIL.

The first aspect of the disclosure may seek to provide an improved stop system for a high power system. A technical benefit may include that an improved stop system for a high power system is provided.

When the at least part of the high power system is disconnected, high power from the high power system is prevented or stopped from entering other systems comprised in, for example, a vehicle. When at least part of the high power system is disconnected, the risk for damage to the other system is reduced or prevented. This also increases safety for users handling or being located in proximity of the high power system. The present disclosure provides a stop system which is quite noise immune. Furthermore, the stop system is a fail safe way of disconnecting at least part of the high power system.

Optionally in some examples, including in at least one preferred example, the stop system may be configured to disconnect at least part of the high power system when the condition of the HVIL low power signal transmitted through the HVIL is that it is interrupted. A technical benefit may include that an improved stop system for a high power system is provided. When the HVIL low power signal is interrupted, it may trigger disconnection of the high power system which consequently reduces or removes the risk for hazardous power signal transmitted to other parts of the system. This also increases the safety for users located in proximity of or handling the high power system since they do not have to be worried that they may accidentally get in contact with hazardous power signals which may cause severe injury to the user.

By utilizing the HVIL, the approach safety requirements for disconnection is fulfilled. No additional high power components as high power contactors are required, the high power system may be used right away. The stop system may be utilized for emergency stop button, maintenance disconnect, first responder disconnect, etc.

Optionally in some examples, including in at least one preferred example, the stop system may be configured with a time delay. The time delay may be configured to delay the disconnection until after a time period has expired starting from detection of the interruption of the HVIL low power signal. A technical benefit may include that an improved stop system for a high power system is provided. The time delay may be necessary to turn off the power system, because the relays would be operated under load which wears them out quite quickly. The time delay may be used for executing a needed operation sequence to bring the entire system to a safe stop, without having additional component wear or component failure, despite fail safe.

Optionally in some examples, including in at least one preferred example, the stop system may comprise n switches. At least one of the n switches may be configured to interrupt the HVIL which consequently disconnects the at least part of the high power system. n is a positive integer. A technical benefit may include that an improved stop system for a high power system is provided. A switch may be an easy and fail safe way of enabling disconnection. With a switch, it is not necessary to unplug or disconnect wires manually. Another benefit of a switch may be that it provides a safe way of disconnecting the high power system, it prevents electric shocks or short circuits for users handling the system in which the stop system is located. A switch is an easy way of disconnecting the high power system without direct interaction with the high power system. A switch also minimizes war and tear on components.

Optionally in some examples, including in at least one preferred example, the n switches may be arranged to transition between a closed position and an open position when disconnecting the at least part of the high power system. A technical benefit may include that an improved stop system for a high power system is provided. With the transitioning between the closed and open position, it enables disconnection of the at least high power system.

Optionally in some examples, including in at least one preferred example, the n switches may be at least one of: a relay, an opener, a breaker, a contactor, and a digital signal transitioning between 1 and 0. A technical benefit may include that an improved stop system for a high power system is provided. Since the switch may be of different types, the type that best suits the particular application may be used. Other parameters such as complexity, quality, power range that the switch type may handle etc. may be taken into account when selecting switch type.

Optionally in some examples, including in at least one preferred example, the n switches may either be normally opened or normally closed. A technical benefit may include that an improved stop system for a high power system is provided.

Optionally in some examples, including in at least one preferred example, the stop system may comprise a stop loop. The stop loop may comprise:
- a first switch connected to at least one second switch,
- a power source configured to supply power to the first switch,
- a third switch connected in series with the first switch,
The first switch may be configured to trigger the third switch to transition from closed position to open position. A technical benefit may include that an improved stop system for a high power system is provided.

Optionally in some examples, including in at least one preferred example, the third switch may be a time-delayed switch. A technical benefit may include that an improved stop system for a high power system is provided.

Optionally in some examples, including in at least one preferred example, the stop loop may comprise two second switches. A technical benefit may include that an improved stop system for a high power system is provided. Having two stop switches may provide redundancy.

Optionally in some examples, including in at least one preferred example, the first switch may be a relay, and the at least one second switch and the third switch may be breakers or openers. A technical benefit may include that an improved stop system for a high power system is provided.

Optionally in some examples, including in at least one preferred example, the stop loop may comprise at least one of: a fourth switch and a fifth switch. A technical benefit may include that an improved stop system for a high power system is provided. Providing additional switches, such as the fourth and fifth switch may provide redundancy.

Optionally in some examples, including in at least one preferred example, the high power system may be a battery system, or the high power system may comprise the battery system. A technical benefit may include that an improved stop system for a high power system is provided.

According to a second aspect of the disclosure, a system is provided. The system comprises:
- a stop system according to any the first aspect,
- a high power system and
- a HVIL passing through at least a part of the high power system,
wherein the stop system is arranged to disconnect at least part of the high power system based on a condition of a HVIL low power signal transmitted through the HVIL.

Technical benefits of the second aspect of the disclosure may correspond to the technical benefits of the first aspect of the disclosure. Further, all examples of the first aspect are applicable to and combinable with all examples of the second aspect, and vice versa.

The second aspect of the disclosure may seek to provide an improved stop system for a high power system. A technical benefit may include that an improved stop system for a high power system is provided.

Optionally in some examples, including in at least one preferred example, the system may be a vehicle or a Battery Energy Storage System (BESS). A technical benefit may include that an improved stop system for a high power system is provided.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
FIG. 1 is an exemplary drawing illustrating a vehicle, according to an example.
FIG. 2a, 2b, 2c are exemplary block diagrams illustrating a stop system and a high power system, according to an example.
FIG. 3 is an exemplary block diagram illustrating a HVIL, according to an example.
FIG. 4 is an exemplary drawing illustrating a modular signal wiring harness, according to an example.
**FIG. 5a** and **5b** are exemplary drawings illustrating a stop system, according to an example.
**FIG. 6** is another view of **FIG. 1****,** according to an example.

### DETAILED DESCRIPTION

The detailed description set forth below provides information and examples of the disclosed technology with sufficient detail to enable those skilled in the art to practice the disclosure.

Safety is an aspect in a system with high power that have high priority. Examples of such systems are vehicles, battery storage systems etc. There are numerous protective measures implemented in such a system. For example, a vehicle with hazardous voltage circuits is required to have a disconnect device for disconnecting the system in case a situation with high risk occurs. For a vehicle system such as a battery system, the disconnect device is located close to the battery system terminals. The disconnect device consists of either a manual operated switch or a circuit breaker. The disconnect device may be an emergency switch off device for disconnecting the power supply. Pure software disconnect should be avoided due to safety aspects. There is a strive to further improve safety in vehicles.

To implement a stop system, an opener switch can be utilized in an HVIL. The HVIL ensures that all traction voltage connections of the system are done properly and if they are in a good condition. The HVIL utilizes a small current source, e.g. 15 to 30 ma, that is routed through additional signal cables through the traction voltage components. HVIL is a feature arranged to shut down the traction voltage system if the current loop is interrupted by false cable connections. The stop system of this disclosure may be added into one HVIL to implement a disconnect function. The stop system may be or may comprise a normally closed opener.

Multiple switches such as for example multipole relay and series connection of opener contacts may be comprised in the stop system.

There may be a time delay to shut down first the high power system, e.g. the power conversion system, has been set as a requirement to reduce the relay wear on the contactors.

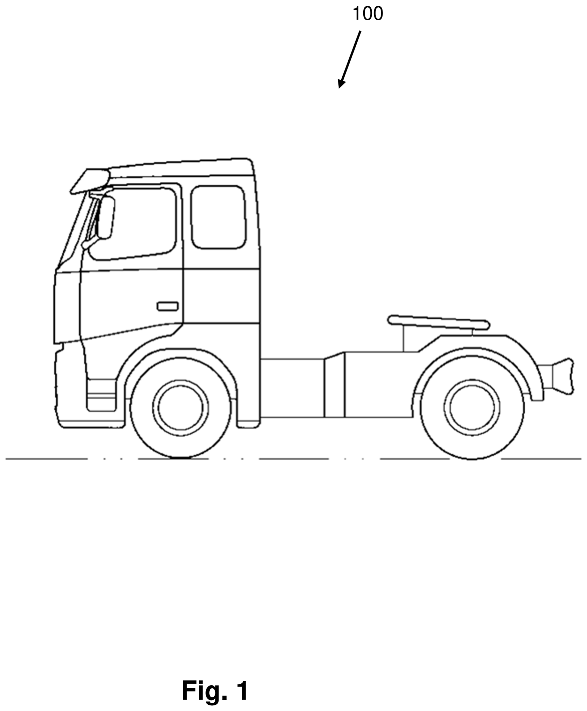

**FIG. 1** is an exemplary drawing illustrating a vehicle **100,** according to an example. The vehicle 100 is a heavy-duty vehicle, such as truck, bus, and construction equipment, among other vehicle types. Although the disclosure may be described with respect to a particular vehicle, the disclosure is not restricted to any particular vehicle, but may be also used in other vehicles such as, trailers, wheel loaders, articulated haulers, excavators, backhoe loaders, passenger cars, marine vessels etc. It may also be applied in various industrial construction machines or working machines.

The vehicle **100** may be a truck for towing one or more trailers (not shown). It shall however be understood that the vehicle may be any other type of vehicle, such as another type of truck, a bus, a passenger car, and construction equipment, such as an excavator, a wheel loader, etc. The vehicle **100** may be operated by a user (not shown) and/or be at least partly automatically driven, i.e., it may be a vehicle comprising autonomous driving capabilities. The vehicle **100** may be a fully electric vehicle or a hybrid vehicle. Using other words, the vehicle **100** may be an at least partly electrically driven vehicle. As such, the vehicle **100** may comprise one or more electric motors/generators and/or an internal combustion engine (not shown) for driving the vehicle **100.**

The term vehicle will be used herein when referring to any of the above types of vehicles

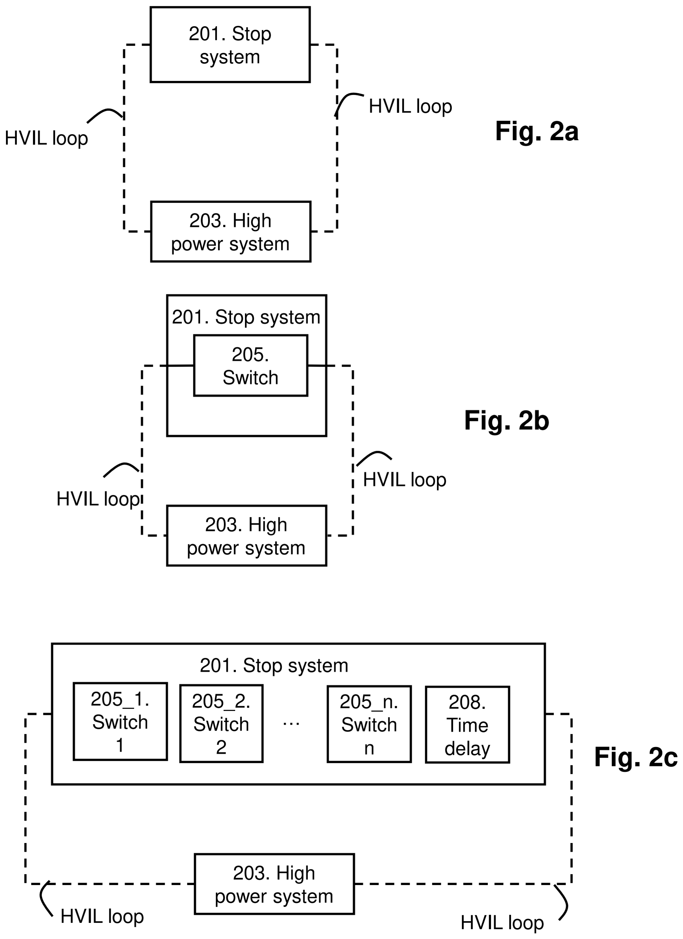

**FIG. 2a, 2b** and **2c** are exemplary block diagrams illustrating a stop system **201** and a high power system **203,** according to an example. In all three figs. 2a, 2b and 2c, the HVIL is illustrated with dotted lines. The high power system **203** may be any high power system **203,** for example a power system, battery system, a traction battery system, a BESS, stationary battery storage system, an engine, a motor, transmission system, driveline just to mention some examples. The high power system **203** may operate with power above a power threshold. The high power system **203** may for example operate in the kw range, MW range or above. The high power system **203** operates in a range which is higher than a low power system such as, for example a HVIL system.

The high power system **203** may be comprised in a system **600,** e.g. a vehicle **100** or a BESS such as a stationary battery system. Some examples of the vehicle **100** has been provided above.

**FIG. 2a** illustrates a HVIL running through or into the stop system **201** and the high power system **203.**

**FIG. 2b** illustrates a HVIL running through or into the stop system **201** and the high power system **203.** As seen in **FIG. 2b****,** the stop system **201** may comprise a switch **205** or the stop system **201** may be a switch **205.**

**FIG. 2c** illustrates a HVIL running through or into the stop system **201** and the high power system **203.** As seen in **FIG. 2c****,** the stop system **201** may comprise a first switch 1 **201_1,** a second switch 2 **205_2** and a n'th switch n **205_2.** In other words, the stop system **201** may comprise n switches **205** or the stop system **201** may be the n switches, where n is a positive integer. In an example where n is 2 or higher, the n switches **205** are serially connected. The first or the last switch **205** in a series of switches may be connected to the high power system **203, 303.**

The stop system **201** exemplified in **FIG. 2c** may be configured with a time delay **208.** The time delay **208** may be located at any suitable location in the stop system **201,** for example between two switches **205,** before the first switch **205** in a series of switches **205,** or after the last switch **205** in a series of switches **205,** connected to one switch **205,** or comprised in a switch **205.** The time delay **208** may be implemented in any suitable fashion in the stop system **201** and may comprise any suitable component to provide a time delay **208.** The time delay **208** may be configured to delay the disconnection until after a time period has expired starting from detection of the interruption of the HVIL low power signal. The duration of the time delay **208** may be any suitable time period, for example in the size of milliseconds or seconds. First, an inverter may be turned off and then the HVIL will break, which will deactivate the high power system. The time delay **208** may ensure that the power reduces to zero before maneuvering the high power contactors. The actual time delay may depend on various parameters.

The time delay may be necessary to turn off the power system, because the relays would be operated under load which wears them out quite quickly. The time delay may be used for executing a needed operation sequence to bring the entire system to a safe stop, without having additional component wear or component failure, despite fail safe.

The switch **205** may be any type of switch, for example a relay, a breaker, an opener, a contactor, an auxiliary contact, a digital signal transitioning between 1 and 0, and vice versa. The switch **205** may be referred to as a disconnector, a disconnect device, an interrupter, an interrupting device, a control device, a controller, just to mention some examples. The switch **205** is arranged to transition between a first position and a second position. The first position may be an open position, and the second position may be a closed position, or vice versa. The switch **205** is arranged to interrupt the HVIL, e.g. to interrupt the HVIL low power signal in the HVIL.

The stop system **201** in **FIG. 2a, 2b and 2c** may comprise a multipole relay, control unit or similar with at least one signal. The relay may serve as an external disconnect for maintenance or may be integrated into an emergency stop function. The coil contacts of the relay may be operated by an opener logic to ensure functional safety. Multiple series-connected opener switches may be used for different switches, door sensors or similar applications.

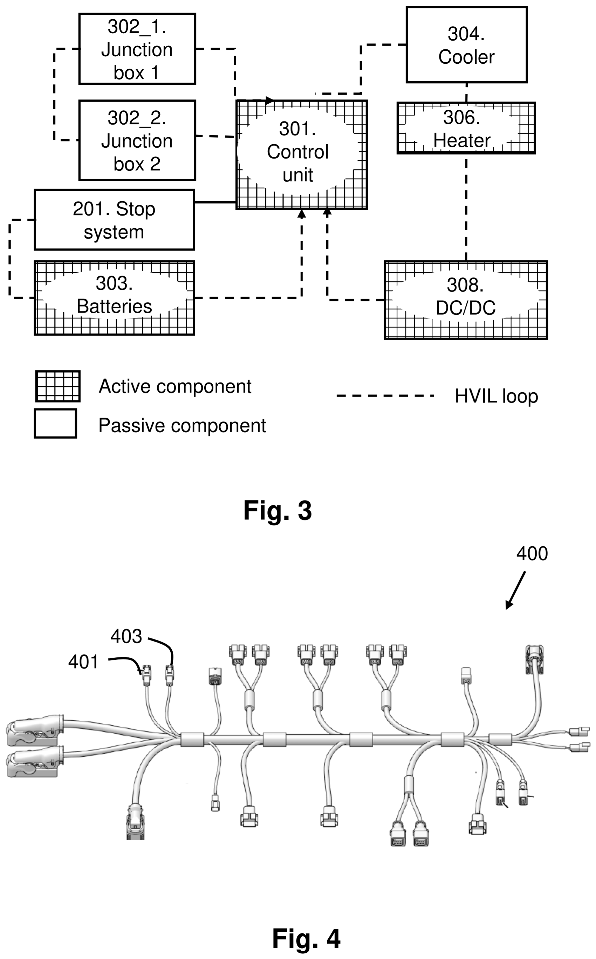

**FIG. 3** is an exemplary block diagram illustrating the vehicle **100,** according to an example. Note that the vehicle **100** is only an example, and that the exemplary block diagram may be applicable to any system with high voltage systems, for example a BESS. The dotted lines in **FIG. 3** illustrate a HVIL. The letter H in HVIL may sometimes stand for High instead of Hazardous. HVIL is a safety feature that monitors a high voltage circuit and/or high voltage components such as for example the traction battery, the DC/DC system, just to mention some examples. HVIL is a uses a low voltage loop to monitor a high voltage circuit and/or component.

In **FIG. 3****,** active components are illustrated as boxes with squared filling and passive components are illustrated as white boxes. The active components redirect the HVIL circuit while the passive components only have HVIL circuits loped through switches in the lid or in connectors. For the active components, it is important to keep track of the HVIL input and output pins of the signal interfaces.

**FIG. 3** illustrates a control unit **301.** The control unit **301** is an active component. The control unit **301** comprises a current source that provides a constant current into the HVIL, e.g. a HVIL low power signal. If the HVIL is interrupted or a deviating current or voltage occurs, it may turn of the high power system **203, 303.** The HVIL low power signal may be for example in the range of 15 to 30 ma, or 5-30V, just to mention some examples. In an example where the HVIL low power signal is a voltage signal, it may be PWM modulated with a certain Duty cycle a frequency. The frequency may be than in a up to a couple of hundred hertz. The HVIL low power signal is below a power threshold. The power threshold may be different from the one of the high power system **203.** The HVIL low power signal operates in a range which is lower than of the high power system **203.**

The control unit **301** may be arranged to monitor, for example traction voltage.

**FIG. 3** illustrates an example with three HVILs. One HVIL is seen in the upper left part of **FIG. 3** going from the control unit **301,** through a first junction box 1 **302_1,** a second junction box 2 **302_2** before going back to the control unit **301.** Another HVIL is seen in the bottom left part of **FIG. 3** and goes from the control unit **301,** through the stop system **201,** the batteries **301** before going back to the control unit **301.** The stop system **201** may be an external stop switch. The third HVIL is seen in the right part of **FIG. 3** going from the control unit **301,** through a cooler **304,** a heater **306,** a DC/DC **308** before going back to the control unit **301.**

**FIG. 4** is an exemplary drawing illustrating a modular signal wiring harness **400,** according to an example. The modular signal wiring harness **400** comprises short circuited connectors that can be quicky used to implement the stop system **201.** A first contact **401** may be used for the stop system **201** and the second contact **403** may be used for the HVIL. The first contact **401** may indicate a control unit when the stop system **201** is activated so that can be distinguished between an actual HVIL fault and a stop activated by the stop system **201.** The first contact **401** and the second contact **403** may be short-circuited by default with a removable plug. **FIG. 4** shows several other contacts which may have suitable application, but they will not be further described herein for the sake of simplicity. The number of contacts may be any suitable number, and the numbers of contacts shown in **FIG. 4** is only an example. The components connected to the contacts in **FIG. 4** are powered by a 24V system.

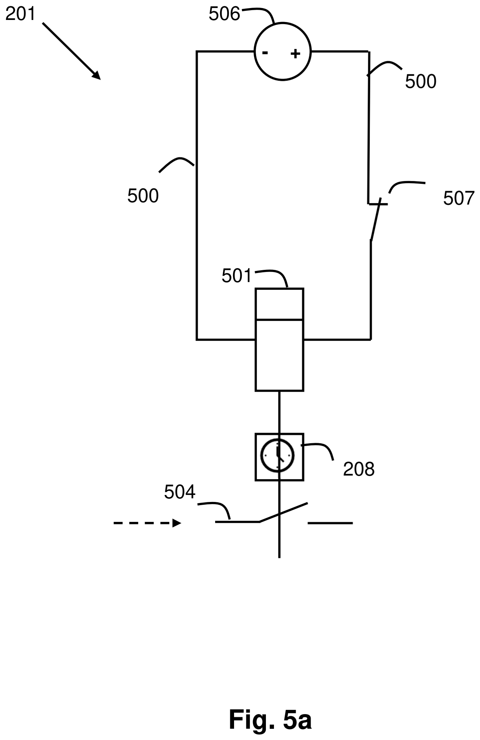

**FIG. 5a** is an exemplary drawing illustrating the stop system **201,** according to an example. As seen in **FIG. 5a****,** the stop system **201** comprises a stop loop **500.** The stop loop 500 comprises a first switch **205** which is exemplified by a relay **501** in **FIG. 5a****.**

The first switch **205,** e.g. the relay **501,** is connected to a second switch **205,** e.g. a first breaker/opener **507.**

The first switch **205,** e.g. the relay **501,** is connected to a third switch **205** which is exemplified by a second breaker/opener **504** in **FIG. 5a****.** Thus, the relay **501** is connected in series to the second breaker/opener **504.** The term breaker/opener refers to that the component called breaker/opener is either a breaker or an opener.

The third switch **205,** e.g. the second breaker/opener **504** may be time delayed, as illustrated with reference number **208.**

The HVIL low power signal goes through the third switch **205,** e.g. the second breaker/opener **504,** when it is in closed position, i.e. the opposite position of what is illustrated in **FIG. 5a****.** The HVIL low power signal is illustrated with a dotted arrow going from left to right in **FIG. 5a****.**

The first switch **205,** e.g. the relay **501,** may be powered by a power source **506.** The power source **506** may be any suitable power source for powering the first switch **205,** e.g. the relay **501.** For example, the power source **506** may be a 24V power source. The power source **506** may be also AC 50/60 Hz with 230V or also 24V via a transformer. Any voltage levels and frequencies may be possible for the power source **506.**

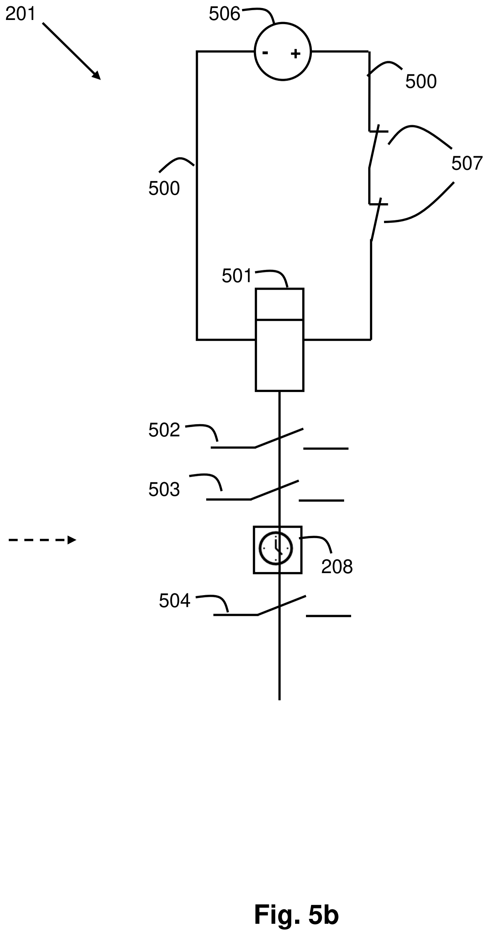

**FIG. 5b** is an exemplary drawing illustrating the stop system **201,** according to an example. **FIG. 5b** shows the same components as in **FIG. 5a** but has some additional components that are not shown in **FIG. 5a****.**

As seen in **FIG. 5b****,** the stop system **201** comprises a stop loop **500.** The stop loop **500** comprises a first switch **205** which is exemplified by a relay **501** in **FIG. 5b****.** The first switch **205,** e.g. the relay **501,** may be powered by a power source **506.**

The first switch **205,** e.g. the relay **501,** is connected to two second switches **205,** e.g. two first breaker/opener **507.** This is different from what is shown in **FIG. 5a** which shows one second switch **205,** e.g. one first breaker/opener **507.** Note that two second switches **205,** e.g. two first breakers/openers **507,** are only an example and that any suitable number of first breakers/openers **507,** may be present in the stop loop **500.**

In **FIG. 5b****,** the first switch **205,** e.g. the relay **501,** is illustrated to be connected to three switches **205.** The three switches **205** may be the third switch **205,** e.g. the time delayed second breaker/opener **504,** a fourth switch **205,** e.g. a third breaker/opener **503** and a fifth switch **205,** e.g. a fourth breaker/opener **502.** The fourth or fifth switch **205,** e.g. the third or fourth breaker/opener **502,** may be located closest to the first switch **205,** e.g. the relay **501.** The third and fourth switches **205,** e.g. the fourth and fifth breaker/opener **502, 503** are not illustrated in **FIG. 5a****.**

Note that
The HVIL low power signal goes through the third switch **205,** e.g. the second breaker/opener **504,** when it is in closed position, i.e. the opposite position of what is illustrated in **FIG. 5b****.** The HVIL low power signal is illustrated with a dotted arrow going from left to right in **FIG. 5b****.**

In the list below is an overview of the components illustrated in **FIG. 5a** and **FIG. 5b****,** the different example terms used for these components and in which fig. they are illustrated.
- First switch **205:**
   ∘ Relay **501**
   ∘ Shown in **FIG. 5a****,****5b**
- Second switch **205:**
   ∘ First breaker/opener **507**
   ∘ There may be one, two or more second switches **205**
   ∘ Shown in **FIG. 5a****,****5b**
- Third switch **205:**
   ∘ Second breaker/opener **504**
   ∘ Second breaker/opener **504** connected to time delay **208** or comprising time delay **208**
   ∘ Time delayed breaker/opener **504, 208**
   ∘ Shown in **FIG. 5a****,****5b**
- Fourth switch **205:**
   ∘ Third breaker/opener **503**
   ∘ Shown in **FIG. 5b**
- Fifth switch **205:**
   ∘ Fourth breaker/opener **502**
   ∘ Shown in **FIG. 5b**

Note that the relay and breaker/opener in the list above are only examples, and that each switch **205 in** **FIG. 5a** and **5b** may be of any suitable time, for example a relay, a breaker, an opener, a contactor, an auxiliary contact, a digital signal transitioning between 1 and 0, and vice versa. The switch **205** may be referred to as a disconnector, a disconnect device, an interrupter, an interrupting device, a control device, a controller, just to mention some examples.

The stop loop **500** may comprise the first switch **205,** e.g. the relay **501,** the power source **506** and the second switch **205,** e.g. the first breaker/opener **507.** The third switch **205,** e.g. the second breaker/opener **504,** the fourth switch **205,** e.g. the third breaker opener **503** and the fifth switch **205,** e.g. the fourth breaker/opener **502** may be part of the stop loop **500,** or they may be not part of the stop loop **500** but connected to the stop loop **500.**

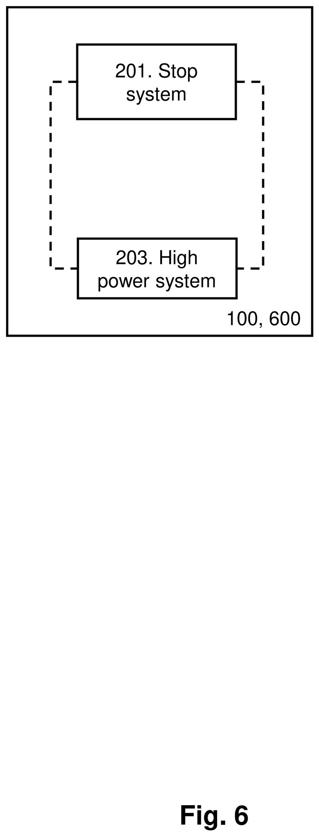

**FIG. 6** is another view of **FIG. 1****,** according to an example. **FIG. 6** illustrates a stop system **201** for a high power system **203, 303.** The stop system **201** and the high power system **203, 303** may be comprised in a system **600.**

The stop system **201** is arranged in a HVIL passing through at least a part of the high power system **203, 303.** The stop system **201** is configured to trigger disconnection of at least part of the high power system **203, 303** based on a condition of a HVIL low power signal transmitted through the HVIL.

When the at least part of the high power system **203, 303** is disconnected, high power from the high power system **203, 303** is prevented or stopped from entering other systems of the vehicle **100.** When at least part of the high power system **203, 303** is disconnected, the risk for damage of other system of the vehicle **100** is reduced or prevented.

A part of the high power system **203, 303** or the whole high power system **203,** 303 may be disconnected, i.e. disconnected from the remaining of the vehicle **100.**

The condition may be that the HVIL low power signal is interrupted or that it is uninterrupted. The condition may be that a difference between the HVIL low power signal measured at an input point and at an output point is at or above a threshold, or that the difference is below the threshold. When the difference between the HVIL low power signal measured at the input point and measured at the output point is at or above the threshold, the difference may be considered too high. When the difference between the HVIL low power signal measured at the input point and measured at the output point is below the threshold, the difference may be considered acceptable, i.e. not too high.

The high power system **203, 303** may be a battery system or the high power system **203, 303** may comprise the battery system. The high power system **203, 303** may be a high voltage system **203, 303** or a high current system **203, 303.**

The stop system **201** may be described an interface that can connect a disconnect mechanism

The HVIL lop power signal may be at least one of: a current, a voltage, and a pulse width modulated signal.

The stop system **201** may be configured to disconnect at least part of the high power system **203, 303** when the condition of the HVIL low power signal transmitted through the HVIL is that it is interrupted or that the difference is at or above a threshold.

When restarting the high power system **203, 303** after a disconnection, this may be reset by another input, such as software or a reset device. Under normal operation the HVIL may or may not disconnect the high power system **203, 303.**

When the condition of the HVIL low power signal transmitted through the HVIL is that it is uninterrupted, the stop system **203** may be configured to maintain closed, i.e. to not disconnect the high power system **203, 303** and let the HVIL low power signal to run through the HVIL.

The stop system **201** may be arranged to transition from a closed position to an open position when disconnecting the at least part of the high power system **203, 303.** For example, the switch **205** of the stop system may transition from a closed position to an open or vice versa.

The stop system **201** may be configured with a time delay **208.** The time delay may be configured to delay the disconnection until after a time period has expired starting from detection of the interruption of the HVIL low power signal. The time delay **208** may comprise starting a timer when the interruption is detected and delaying the disconnection until after a time period has expired.

The stop system **201** may comprise n switches **205,** where n is a positive integer. The switch **205** is configured to interrupt the HVIL which consequently disconnects the at least part of the high power system **203, 303.** This may be seen as the stop system **201** disconnects the at least part of the high power system **203, 303.** If the stop system **201** comprises two or more switches **205,** then it may be only one of them that does the interruption.

The n switches **205** may be at least one of: a relay, a breaker, an opener, a contactor, an auxiliary contact, a digital signal transitioning between 1 and 0, and vice versa.

The n switches **205** may be either normally opened or normally closed. Normally opened may be default opened and normally closed may be default closed. When the switch **20** is normally opened, then it may be an opener. When the switch **205** is normally closed, then it may be a breaker. In other words, the n switches **205** may be closed when no interruption of the HVIL low power signal is detected and closed when the HVIL low power signal is interrupted.

The stop system **201** may comprise a stop loop **500.** The stop loop **500 may** comprise:
- a first switch **205, 501** connected to at least one second switch **205, 507,**
- a power source **506** configured to supply power to the first switch **205, 501,**
- a third switch **205, 504** connected in series with the first switch **205, 501,**

The first switch **205, 501** may be configured to trigger the third switch **205, 504** to transition from closed position to open position.

The third switch **205, 504** may be a time-delayed switch.

The stop loop **500** may comprise two second switches **205, 507.**

The first switch **205, 501** may be a relay. The at least one second switch **205, 507** and the third switch **205, 504** may be breakers or openers.

The stop loop **500** may comprise at least one of: a fourth switch **205, 503** and a fifth switch **205, 502.** In other words, the stop loop **500** may comprise the fourth switch **205, 503,** or it may comprise the fifth switch **205, 502,** or it may comprise both the fourth switch **205, 503** and the fifth switch **205, 502.**

The high power system **203, 303** may be a battery system, or the high power system **203, 303** may comprise the battery system.

The system **600** comprises:
- a stop system **201,** as described herein,
- a high power system **203,** and
- a HVIL passing through at least a part of the high power system **203, 303,** wherein the stop system **201** is arranged to disconnect at least part of the high power system **203, 303** based on a condition of a HVIL low power signal transmitted through the HVIL.

The system **600** may be a vehicle **100** or a BESS, e.g. a stationary battery storage system.

Summarized, a stop system or a disconnect system for a high power system such as a battery system is provided. The stop system **201,** e.g. a disconnect mechanism, of a battery system, safely shuts down the traction voltage system utilizing a HVIL signal breaker. By utilizing the HVIL, the stop system easily fulfills functional safety requirements.

No additional traction voltage components as HV contactors are required with the stop system **201,** vehicle batteries may be used right away. The stop system **201** utilizes existing contactors in the battery service box.

There may be a relay with auxiliary contacts that allows for connection of several switches **205** without disturbing the HVIL current, because normally the component count in an HVIL is limited.

The stop system **201** may be easily integrated into a modular harness, e.g. as exemplified in **FIG. 4****.**

The stop system **201** may be utilized for emergency stop button, maintenance disconnect, first responder disconnect, etc., just to mention some examples.

Below follows a list of examples 1-15. Each example can be combined with any of the other examples discussed above.

**Example 1:** A stop system **201** for a high power system **203, 303,** wherein the stop system **201** is arranged in a HVIL passing through at least a part of the high power system **203, 303,** and wherein the stop system **201** is configured to trigger disconnection of at least part of the high power system based on a condition of a HVIL low power signal transmitted through the HVIL.

**Example 2:** The stop system **201** of example 1, wherein the stop system **201** is configured to disconnect at least part of the high power system **203, 303** when the condition of the HVIL low power signal transmitted through the HVIL is that it is interrupted.

**Example 3:** The stop system **201** of example 2, wherein the stop system **201** is configured with a time delay **208,** the time delay being configured to delay the disconnection until after a time period has expired starting from detection of the interruption of the HVIL low power signal.

**Example 4:** The stop system **201** of any of the preceding examples, comprising n switches **205,** wherein at least one of the n switches is configured to interrupt the HVIL which consequently disconnects the at least part of the high power system **203, 303,** wherein n is a positive integer.

**Example 5:** The stop system **201** of example 4, wherein the n switches **205** are arranged to transition between a closed position and an open position when disconnecting the at least part of the high power system **203, 303.**

**Example 6:** The stop system **201** of any of examples 4-5, wherein the n switches **205** are at least one of: a relay, an opener, a breaker, a contactor, and a digital signal transitioning between 1 and 0.

**Example 7:** The stop system **201** of any of examples 4-6, wherein the n switches (205) are either normally opened or normally closed.

**Example 8:** The stop system **201** according to any of the preceding examples, wherein the stop system **201** comprises a stop loop **500,**
wherein the stop loop **500** comprises:
   - a first switch **205, 501** connected to at least one second switch **205, 507,**
   - a power source **506** configured to supply power to the first switch **205, 501,**
   - a third switch **205, 504** connected in series with the first switch **205, 501,**
wherein the first switch **205, 501** is configured to trigger the third switch **205, 504** to transition from closed position to open position.

**Example 9:** The stop system **201** according to example 8, wherein the third switch **205, 504** is a time-delayed switch.

**Example 10:** The stop system **201** according to any of examples 8-10, wherein the stop loop 500 comprises two second switches **205, 507.**

**Example 11:** The stop system **201** according to any of examples 8-11, wherein the first switch **205, 501** is a relay, and wherein the at least one second switch **205, 507** and the third switch **205, 504** are breakers or openers.

**Example 12:** The stop system **201** according to any of examples 8-9, wherein the stop loop **500** comprises at least one of: a fourth switch **205, 503** and a fifth switch **205, 502.**

**Example 13:** The stop system **201** according to any of the preceding examples, wherein high power system **203, 303** is a battery system, or wherein the high power system 203, 303 comprises the battery system.

**Example 14:** A system **600** comprising:
- a stop system **201** according to any of examples 1-13,
- a high power system **203, 303** and
- a HVIL passing through at least a part of the high power system **203, 303,**
wherein the stop system **201** is arranged to disconnect at least part of the high power system **203, 303** based on a condition of a HVIL low power signal transmitted through the HVIL.

**Example 15:** The system **600** according to example 14, wherein the system 600 is a vehicle **100** or a Battery Energy Storage System, BESS.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A stop system (201) for a high power system (203, 303),
wherein the stop system (201) is arranged in a Hazardous Voltage Interlock Loop, HVIL passing through at least a part of the high power system (203, 303), and
wherein the stop system (201) is configured to trigger disconnection of at least part of the high power system (203, 303) based on a condition of a HVIL low power signal transmitted through the HVIL,
wherein the condition is that the HVIL low power signal transmitted through the HVIL is interrupted, and
wherein the stop system (201) is configured with a time delay (208), the time delay (208) being configured to delay the disconnection until after a time period has expired starting from detection of the interruption of the HVIL low power signal.

2. The stop system (201) of claim 1, comprising:
n switches (205), wherein at least one of the n switches is configured to interrupt the HVIL which consequently disconnects the at least part of the high power system (203, 303), wherein n is a positive integer.

3. The stop system (201) of claim 2, wherein the n switches (205) are arranged to transition between a closed position and an open position when disconnecting the at least part of the high power system (203, 303).

4. The stop system (201) of any of claims 2-3, wherein the n switches (205) are at least one of: a relay, an opener, a breaker, a contactor, and a digital signal transitioning between 1 and 0.

5. The stop system (201) of any of claims 2-4, wherein the n switches (205) are either normally opened or normally closed.

6. The stop system (201) according to any of the preceding claims, wherein the stop system (201) comprises a stop loop (500),
wherein the stop loop (500) comprises:
- a first switch (205, 501) connected to at least one second switch (205, 507),
- a power source (506) configured to supply power to the first switch (205, 501),
- a third switch (205, 504) connected in series with the first switch (205, 501),
wherein the first switch (205, 501) is configured to trigger the third switch (205, 504) to transition from closed position to open position.

7. The stop system (201) according to claim 6, wherein the third switch (205, 504) is a time-delayed switch.

8. The stop system (201) according to any of claims 6-7, wherein the stop loop (500) comprises two second switches (205, 507).

9. The stop system (201) according to any of claims 6-8, wherein the first switch (205, 501) is a relay, and
wherein the at least one second switch (205, 507) and the third switch (205, 504) are breakers or openers.

10. The stop system (201) according to any of claims 6-9, wherein the stop loop (500) comprises at least one of: a fourth switch (205, 503) and a fifth switch (205, 502).

11. The stop system (201) according to any of the preceding claims, wherein the high power system (203, 303) is a battery system, or wherein the high power system (203, 303) comprises the battery system.

12. A system (600) comprising:
- a stop system (201) according to any of claims 1-11,
- a high power system (203, 303) and
- a Hazardous Voltage Interlock Loop, HVIL, loop passing through at least a part of the high power system (203, 303),
wherein the stop system (201) is configured to disconnect at least part of the high power system (203, 303) based on a condition of a HVIL low power signal transmitted through the HVIL.

13. The system (600) according to claim 12, wherein the system is a vehicle (100) or a Battery Energy Storage System, BESS.
